# EUROPEAN PATENT APPLICATION

(11) **EP 4 571 949 A1**
(43) Date of publication of application: **18.06.2025**
(21) Application number: 24188719.9
(22) Date of filing: 15.07.2024
(51) Int. Cl.: H01M 50/103, H01M 50/107, H01M 50/15, H01M 50/152, H01M 50/169, H01M 50/176

(54) **SECONDARY BATTERY AND BATTERY MODULE HAVING THE SAME**

(30) Priority: 14.12.2023 KR 20230181587
(71) Applicant: SAMSUNG SDI CO., LTD., Giheung-gu Yongin-si, Gyeonggi-do 17084 (KR)
(72) Inventor: LEE, Hyun Soo, 17084 Yongin-Si (KR)
(74) Representative: Marks & Clerk LLP

(57) **Abstract**

A secondary battery (500), comprising: a battery can (100) having an opening (O) to expose an accommodating space to the outside, a can width (Dcan) in a first direction, and a can length in a second direction crossing the first direction; an electrode assembly (EA) in the accommodating space, and comprising a positive electrode plate (A), a negative electrode plate (C), and a separator (S) between the positive electrode plate (A) and the negative electrode plate (C); a cap assembly (200) electrically connected to the positive electrode plate (A) and the negative electrode plate (C), and having a welding recess (WR) at a peripheral portion of the cap assembly (200), the cap assembly (200) being joined to a welding end (WE) of the battery can 100 via the welding recess (WR) to seal the accommodating space; and a side welding unit (300) joining a side portion of the welding end (WE) of the battery can (100) to a side portion of the cap assembly (200), a surface of the side welding unit (300) being located at a same level as or a level lower than that of an outer peripheral surface (101) of the battery can (100).

## Description

### BACKGROUND

### 1. Field

Aspects of embodiments of the present disclosure relate to a secondary battery, and a battery module including the secondary battery.

### 2. Description of the Related Art

Secondary batteries may have a structure in which a cap assembly is bonded to the end of a battery can containing an electrode assembly to seal the interior of the battery can. An electrical connection between the electrode assembly and the external environment is established through electrode terminals provided in the cap assembly.

The cap assembly functions as a connecting terminal that electrically connects the external environment with the electrode assembly. Therefore, surface unevenness of the cap assembly can result in uneven contact areas, which may lead to connection failures in the battery module and a packing process of the battery.

The above information disclosed in this background section is for enhancement of understanding of the background of the present disclosure, and therefore, it may contain information that does not constitute prior art.

### SUMMARY

A cap assembly in which the electrode terminals are disposed may be coupled to a welding step provided on the battery can, and may be coupled to the battery can by top surface welding. In this case, a weld bead may protrude upward, and a cross section of the electrode may become uneven.

For example, in a secondary battery with a pair of side terminal structures in which a cap assembly is disposed at each opened end of a battery can to individually connect with a positive electrode and a negative electrode of an electrode assembly, surface unevenness caused by welding beads on the cap assembly may result in connection failures at each of the positive electrode and the negative electrode.

Embodiments of the present disclosure may be directed to a secondary battery including a welding recess at a side portion of a cap assembly and a side portion of a battery can, and/or a battery module including the secondary battery.

Embodiments of the present disclosure may be directed to a secondary battery having a uniform size after welding by including a welding recess between the battery can and the cap assembly, and/or a battery module including the secondary battery.

The above and other aspects and features of the present disclosure will be described in, or will be more apparent from, the following description of some embodiments of the present disclosure.

According to one or more embodiments of the present disclosure, a secondary battery includes: a battery can having an opening to expose an accommodating space to the outside, a can width in a first direction, and a can length in a second direction crossing the first direction; an electrode assembly in the accommodating space, and including a positive electrode plate, a negative electrode plate, and a separator between the positive electrode plate and the negative electrode plate; a cap assembly electrically connected to the positive electrode plate and the negative electrode plate, and having a welding recess at a peripheral portion of the cap assembly, the cap assembly being joined to a welding end of the battery can via the welding recess to seal the accommodating space; and a side weld joining a side portion of the welding end of the battery can to a side portion of the cap assembly, a surface of the side weld being located at a same level as or a level lower than that of an outer peripheral surface of the battery can.

In an embodiment, a width of the cap assembly in the first direction may be smaller than a width of the battery can in the first direction.

In an embodiment, the cap assembly may include: a body having a body-front surface exposed to the outside, a body-back surface defining the accommodating space, and a first thickness in the second direction from the body-front surface to the body-back surface; and a wing having a wing-front surface that is flush with the body-front surface, a wing-back surface defining the welding recess, and a second thickness in the second direction from the wing-front surface to the wing-back surface, the second thickness being smaller than the first thickness.

In an embodiment, the welding recess may be defined by the wing-back surface and a body-side surface connecting the wing-back surface and the body-back surface to each other, the welding recess may be configured to join the welding end to the wing-back surface and the body-side surface, and a welding step may be located between a wing-side surface of the wing and an outer peripheral surface of the welding end.

In an embodiment, the side weld may include: a welding portion joining the wing-back surface, the body-side surface, and the welding end to each other; and a bead portion extending from the welding portion along the wing-side surface, and having a maximum thickness corresponding to a thickness of the welding step.

In an embodiment, a surface of the bead portion may be located at a same level as or a lower level than that of the outer peripheral surface of the welding end.

In an embodiment, the second thickness may be at least 50% and no more than 80% of the first thickness.

In an embodiment, a width of the cap assembly in the first direction may be the same as the can width of the battery can in the first direction.

In an embodiment, the cap assembly may include: a body having a body-front surface exposed to the outside, a body-back surface defining the accommodating space, and a first thickness in the second direction from the body-front surface to the body-back surface; and a wing having a wing-front surface that may be flush with the body-front surface, a wing-reduced-back surface defining the welding recess and having a second thickness smaller than the first thickness in the second direction from the wing-front surface, a wing-bead-back surface having a third thickness smaller than the second thickness in the second direction from the wing-front surface to the wing-reduced-back surface, and a wing-bead-side surface connected to the wing-bead-back surface and the wing-reduced-back surface and having a stepped portion against a body-side surface. The cap assembly may have a first side recess communicatively connected with the welding recess and defined by the wing-bead-back surface and the wing-bead-side surface.

In an embodiment, the welding end may include: a can-bead-side surface that may be stepped with respect to the outer peripheral surface, and located at a same level as that of the wing-bead-side surface; and a can-bead-front surface facing the wing-bead-back surface in the second direction, and connected to the can-bead-side surface and the outer peripheral surface. The welding end may have a second side recess communicatively connected with the welding recess and the first side recess, the second side recess being defined by the can-bead-side surface and the can-bead-front surface.

In an embodiment, the side weld may include: a welding portion joining the wing-reduced-back surface, the body-side surface, and the welding end to each other; and a bead portion connected to the welding portion, and covering the wing-bead-side surface and the can-bead-side surface, the bead portion extending conically along the wing-bead-back surface and the can-bead-front surface, while a tip thereof may be located at a level lower than those of a wing-side surface and the outer peripheral surface.

In an embodiment, the wing-bead-back surface may have a first sloping surface extending from an edge of a wing-side surface to an edge of the wing-reduced-back surface, and the third thickness that may be variable along the first direction, and the can-bead-front surface may have a second sloping surface extending from an edge of the outer peripheral surface to an edge of the can-bead-side surface.

In an embodiment, the side weld may include: a welding portion joining the wing-reduced-back surface, the body-side surface, and the welding end to each other; and a bead portion including a base portion having an increasing volume in the first direction from the welding portion while being in contact with the first sloping surface and the second sloping surface, and a conical portion having a decreasing volume in the first direction while not being in contact with the first sloping surface and the second sloping surface. A top of the conical portion may be located at a level lower than those of the outer peripheral surface and the wing-side surface.

In an embodiment, the opening may be located at each of opposite ends of the battery can in the second direction, and the cap assembly may include a pair of side terminals at the opposite ends of the battery can to electrically connect to the positive electrode plate and the negative electrode plate.

According to one or more embodiments of the present disclosure, a battery module includes: a plurality of battery cells, each including: a corresponding battery can configured to accommodate an electrode assembly, and having a can width in a first direction and a can length in a second direction crossing the first direction; and a corresponding cap assembly including electrode terminals, and welded to an end of the corresponding battery can, the plurality of battery cells being aligned along a row in a third direction so that the battery cans of the battery cells face each other; a plurality of connection terminals on a top surface of the plurality of battery cells, and connected to the electrode terminals of the plurality of battery cells through connection lines connecting the electrode terminals with one another; a plurality of connection tabs connecting a group of connection terminals from among the connection terminals to each other to transmit electrical energy; and a protection circuit connected with the plurality of connection tabs to protect the plurality of battery cells from an overcurrent. Each of the plurality of battery cells further includes a side weld to which a welding end of the corresponding battery can is received in a welding recess at a side of the corresponding cap assembly and welded, the side weld having a surface that is located at a same level as or a lower level than that of an outer peripheral surface of the corresponding battery can.

In an embodiment, the corresponding cap assembly may include: a body having a body-front surface exposed to the outside, a body-back surface defining an accommodating space that is an internal space of the corresponding battery can, and a first thickness in the second direction from the body-front surface to the body-back surface; and a wing having a wing-front surface that may be flush with the body-front surface, a wing-back surface defining the welding recess, and a second thickness in the second direction from the wing-front surface to the wing-back surface, the second thickness being smaller than the first thickness.

In an embodiment, a width of the corresponding cap assembly may be smaller than the can width of the corresponding battery can, and the side weld may include: a welding portion joining the wing-back surface, a body-side surface, and the welding end to each other; and a bead portion extending from the welding portion along a wing-side surface, and having a maximum thickness corresponding to a thickness of a welding stepped portion.

In an embodiment, the corresponding cap assembly may include: a body having a body-front surface exposed to the outside, a body-back surface defining the accommodating space, and a first thickness in the second direction from the body-front surface; and a wing having a wing-front surface that may be flush with the body-front surface, a wing-reduced-back surface defining the welding recess and having a second thickness smaller than the first thickness in the second direction from the wing-front surface, a wing-bead-back surface having a third thickness smaller than the second thickness in the second direction from the wing-front surface, and a wing-bead-side surface connected to the wing-bead-back surface and the wing-reduced-back surface and having a stepped portion against a body-side surface. The corresponding cap assembly may have a first side recess communicatively connected with the welding recess and defined by the wing-bead-back surface and the wing-bead-side surface. The welding end may include: a can-bead-side surface that is stepped with respect to the outer peripheral surface, and located at a same level as that of the wing-bead-side surface; and a can-bead-front surface facing the wing-bead-back surface in the second direction and connected to the can-bead-side surface and the outer peripheral surface. The welding end may have a second side recess communicatively connected with the welding recess and the first side recess and defined by the can-bead-side surface and the can-bead-front surface.

In an embodiment, the side weld may include: a welding portion joining the wing-reduced-back surface, the body-side surface, and the welding end to each other; and a bead portion connected to the welding portion, and covering the wing-bead-side surface and the can-bead-side surface, the bead portion extending conically along the wing-bead-back surface and the can-bead-front surface, while a tip thereof may be located at a level lower than those of a wing-side surface and the outer peripheral surface.

In an embodiment, the corresponding cap assembly may include a pair of side terminals at opposite ends of the corresponding battery can to electrically connect to a positive electrode plate and a negative electrode plate.

At least some of the above and other features of the invention are set out in the claims.

According to some embodiments of the present disclosure, a bonding recess (e.g., a welding recess) may be formed in an integral cap assembly manufactured by molding, instead of in a battery can that is integrally formed by a forging process such as deep drawing. Therefore, the cap assembly and the battery can may be joined by side welding, without an additional processing for the battery can. Accordingly, the stability and yield of the secondary battery may be improved.

In some embodiments, during welding of the cap assembly and the battery can, the weld bead generated on a sidewall may be located below an outer peripheral surface of the battery can to prevent or substantially prevent the weld bead from protruding to the outside of the battery can. Accordingly, a uniform or substantially uniform width of the cap assembly may be maintained.

In some embodiments, by preventing or substantially preventing the weld bead from protruding onto a surface of the secondary battery, it may be possible to minimize or reduce an alignment complexity in the face-to-face alignment of adjacent battery cells in a battery module having secondary batteries that are arranged in a row, thereby increasing the density of the battery cells accommodated in a single housing.

However, the aspects and features of the present disclosure are not limited to those described above, and the above and other aspects and features will be set forth, in part, in the detailed description with reference to the drawings, and in part, may be apparent therefrom, or may be learned by practicing one or more of the presented embodiments of the present disclosure.

### BRIEF DESCRIPTION OF THE DRAWINGS

The above and other aspects and features of the present disclosure will be more clearly understood from the following detailed description of the illustrative, nonlimiting embodiments with reference to the accompanying drawings, in which:
FIG. 1 is a perspective view illustrating a secondary battery according to an embodiment of the present disclosure;
FIG. 2 is a cross-sectional view of the secondary battery taken along the line A-A' shown in FIG. 1;
FIG. 3 is a cross-sectional view of the secondary battery taken along the line B-B' shown in FIG. 1;
FIG. 4 is a perspective view illustrating an electrode structure included in the secondary battery shown in FIG. 1;
FIG. 5 illustrates an embodiment of a side welding unit included in the secondary battery shown in FIG. 2;
FIG. 6 illustrates an embodiment of a side welding unit included in the secondary battery shown in FIG. 2;
FIG. 7 illustrates an embodiment of a side welding unit included in the secondary battery shown in FIG. 2;
FIG. 8 illustrates an embodiment of a side welding unit included in the secondary battery shown in FIG. 2; and
FIG. 9 is a perspective view illustrating a battery module according to an embodiment of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

Any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

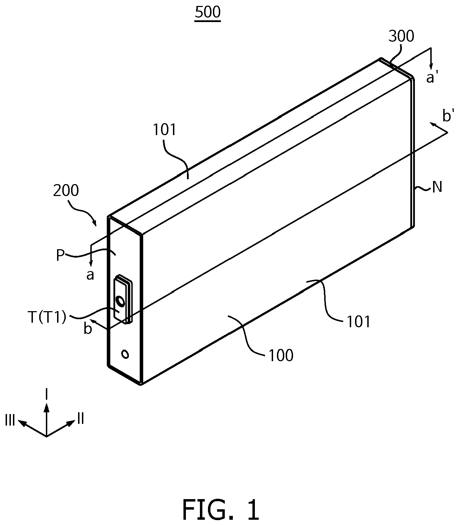

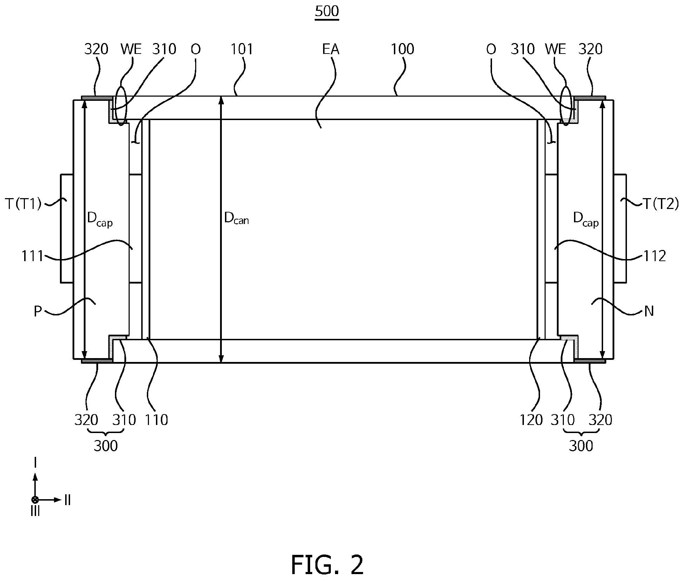

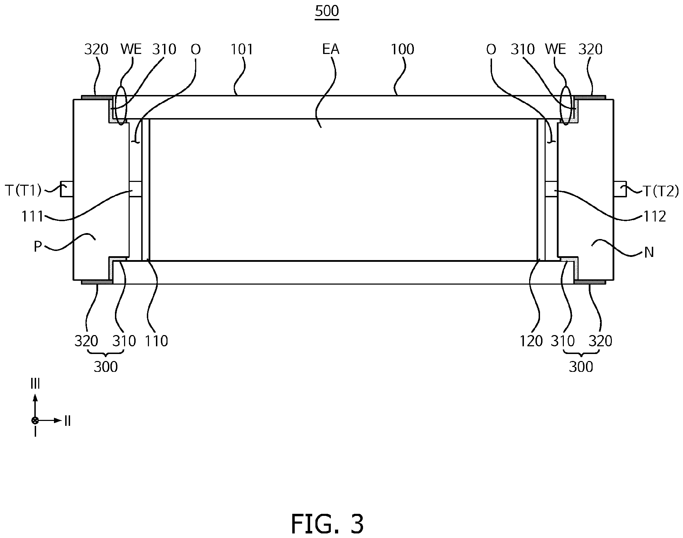

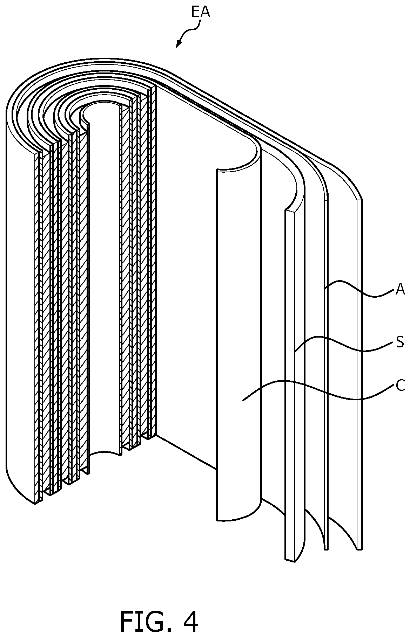

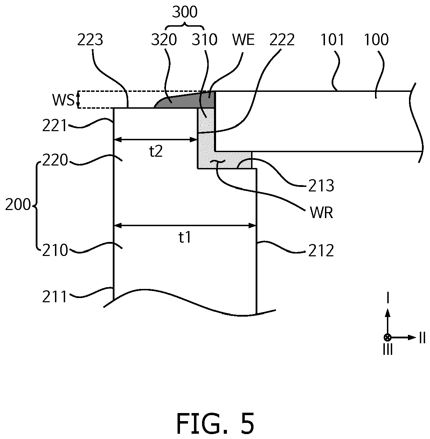

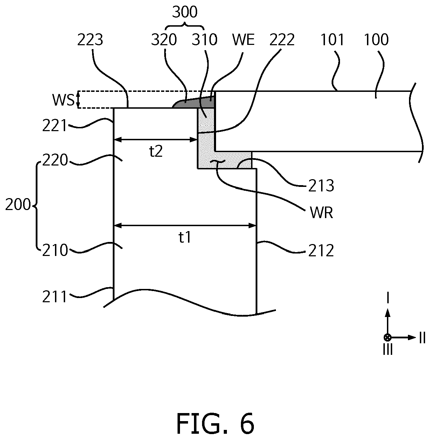

FIG. 1 is a perspective view illustrating a secondary battery according to an embodiment of the present disclosure. FIG. 2 is a cross-sectional view of the secondary battery taken along the line A-A' shown in FIG. 1. FIG. 3 is a cross-sectional view of the secondary battery taken along the line B-B' shown in FIG. 1. FIG. 4 is a perspective view illustrating an electrode structure included in the secondary battery shown in FIG. 1. FIG. 5 illustrates an embodiment of a side welding unit included in the secondary battery shown in FIG. 2. FIG. 6 illustrates an embodiment of a side welding unit included in the secondary battery shown in FIG. 2.

Hereinafter, a prismatic secondary battery may be mainly described as a representative example of a secondary battery. However, the present disclosure is not limited thereto, and the embodiments of the present disclosure described herein may be also be applied to a cylindrical secondary battery as would be understood by those having ordinary skill in the art.

Referring to FIGS. 1 to 6, a secondary battery 500 according to one or more embodiments of the present disclosure includes a battery can 100 having an accommodating space therein, an electrode assembly EA accommodated in the accommodating space, a cap assembly 200 covering an end of the battery can 100 to seal the accommodating space, and a side welding unit (e.g., a side welding part or a side weld portion) 300 joining a side portion of the cap assembly 200 and the battery can 100 to each other.

In an embodiment, the battery can 100 may be provided as a rectangular cylinder with at least one opening O at an end (e.g., with at least one opened end) or between ends of the battery can 100. The battery can 100 may have a can width (Dcan) along a width direction (e.g., a first direction I) of the secondary battery 500, and a can length along a longitudinal direction (e.g., a second direction II) of the secondary battery 500.

For example, the battery can 100 may be provided as a three-dimensional structure formed by a single forging process to have an accommodating space therein where the electrode assembly EA and an electrolyte solution may be accommodated.

The accommodating space is sealed from the outside by the cap assembly 200 that is welded to the end of the battery can 100. Accordingly, a base plate of the cap assembly 200 and the battery can 100 may be constructed of the same or substantially the same material, so that the accommodating space may be sufficiently sealed to improve a welding quality. For example, the battery can 100 may be composed of aluminium or an aluminium alloy, which may be materials having excellent electrical conductivity and ductility.

In an embodiment, the electrode assembly EA may be provided as a wound structure in which a positive electrode plate A and a negative electrode plate C are wound after interposing a separator S, which is an insulator, therebetween. Each of the positive electrode plate A and the negative electrode plate C may include a coated portion, which is a region where an active material is applied to a current collector including (e.g., formed of) a metal foil, and an uncoated portion, which is a region where no active material is applied. The positive electrode plate A of the electrode assembly EA may be connected to a positive lead plate 110 through the positive uncoated portion. The negative electrode plate C may be connected to a negative lead plate 120 through the negative uncoated portion.

The positive lead plate 110 may include or may be provided with a positive connection plate 111, and a positive terminal T1 described in more detail below is connected with the positive connection plate 111. In addition, the negative lead plate 120 may include or may be provided with a negative connection plate 112, and a negative terminal T2 described in more detail below is connected with the negative connection plate 112. The positive terminal T1 and the negative terminal T2 may be connected to an external load or a power source.

The electrode assembly EA may be inserted into the accommodating space of the battery can 100 to form a chemical cell with the electrolyte solution. The electrolyte solution is injected into the accommodating space through an injection hole after the cap assembly 200 and the battery can 100 are sealed to each other by welding. The electrolyte solution may perform an exchange of ions between the positive electrode plate A and the negative electrode plate C constituting the electrode assembly EA to generate a continuous flow of current through the positive terminal T1 and the negative terminal T2, which will be described in more detail below.

In an embodiment, the cap assembly 200 may be provided as a flat or substantially flat plate structure having a cap width Dcap in the first direction I that is smaller than the can width Dean. The cap assembly 200 may include a flat or substantially flat plate including (e.g., made of) a conductive metal, a conductor for electrically connecting the electrode terminals T with the electrode assembly EA, and an insulator.

In the present embodiment, the cap assembly 200 may be provided as an electrode terminal T that is connected to (e.g., coupled to or attached to) the end of the battery can 100 by welding to seal the accommodating space of the battery can 100.

In more detail, in a case where the battery can 100 is an open type cylinder in which both ends (e.g., opposite ends) are opened, two cap assemblies 200 may be provided as a pair of side terminals connected by (e.g., coupled by or attached by) welding to the opposite ends, respectively, of the battery can 100.

In other words, the side terminals may include the positive terminal T1, which is an electrode terminal T connected to the positive electrode plate A, and the negative terminal T2, which is an electrode terminal T connected to the negative electrode plate C, respectively.

For example, the cap assembly 200 may include a body 210 and a wing 220. The body 210 may be provided in a plate shape having a first thickness t1 along the second direction II, which is the longitudinal direction of the secondary battery 500. Further, the body 210 may be a structure electrically connecting the electrode terminal T and the electrode assembly EA to each other.

The body 210 is provided as a cover that covers the opening O of the battery can 100 at a central portion of the cap assembly 200 to seal the accommodating space, which is the internal space of the battery can 100, from the outside. Accordingly, a body-front surface 211 (e.g., a front surface of the body 210) is exposed to the outside, while a body-back surface 212 (e.g., a back surface of the body 210) opposite to the body-front surface 211 faces the accommodating space. In other words, the body 210 is inserted into the opening O of the battery can 100 to define the internal accommodating space, and extends along the second direction II from the body-front surface 211 to the body-back surface 212 with the first thickness t1.

The wing 220 may be a plate-shaped structure extending from a side portion of a flat or substantially flat plate constituting the body 210. The wing 220 may not be provided with a structure for electrically connecting the electrode terminals T and the electrode assembly EA to each other. For example, the wing 220 may include a wing-front surface 221 (e.g., a front surface of the wing 220) that is flush with the body-front surface 211, and a wing-back surface 222 (e.g., a back surface of the wing 220) that defines a welding recess WR. The wing 220 may extend along the second direction II from the wing-front surface 221 to the wing-back surface 222 with a second thickness t2 that is smaller than the first thickness t1.

Accordingly, the wing-back surface 222 may be stepped with respect to the body-back surface 212, so that a space provided beneath the wing-back surface 222 (e.g., at a rear side of the wing-back surface 222) may be provided as the welding recess WR where the cap assembly 200 and the battery can 100 are joined to each other by welding. The welding recess WR may be defined by a body-side surface 213 (e.g., a side surface of the body 210) and the wing-back surface 222 that constitute the stepped portion between the wing-back surface 222 and the body-back surface 212. A welding end WE, which is an end of the battery can 100 that is connected to (e.g., coupled to or attached to) the welding recess WR, is in contact with the wing-back surface 222 and the body-side surface 213. The welding recess WR may be formed continuously or substantially continuously along a periphery of the cap assembly 200 to continuously or substantially continuously engage the welding end WE of the battery can 100.

In the present embodiment, the second thickness T2 may be about 50% to about 80% of the first thickness T1. In a case where the second thickness t2 is less than 50% of the first thickness t1, it may be difficult to sufficiently support the battery can 100 accommodated in the welding recess WR, or damage to the wing 220 may occur during welding, which may increase a welding difficulty. In a case where the second thickness t2 is greater than 80% of the first thickness t1, the size of the welding recess WR may not be sufficient, which may result in poor welding joint strength and support for the battery can 100. Accordingly, the second thickness t2 may be about 50% to about 80% of the first thickness t1.

The wing 220 and the body 210 may include (e.g., may be made of) one or more materials that minimize or reduce the formation of weld beads, while taking into account welding parameters. In the present embodiment, the body-side surface 213 and a lower portion (e.g., a rear portion) of the body 210 adjacent to the body-side surface 213 may each include (e.g., may equally be made of) aluminium and/or an aluminium alloy. The cap assembly 200 and the battery can 100 may be joined to each other by the side welding unit 300 at the welding recess WR to provide the single secondary battery 500.

For example, the side welding unit 300 may join the wing 220 and the welding end WE together at the side of the secondary battery 500, and may be provided at a lower level than that of an outer peripheral surface 101 of the battery can 100 to prevent or substantially prevent an increase in the width of the secondary battery 500.

In the present embodiment, the side welding unit 300 may include a welding portion 310 that joins the wing 220, the body 210, and the welding end WE together by welding, and a bead portion 320 that extends from the welding portion 310 to the outside of the welding recess WR.

The welding portion 310 may join the wing 220, the body 210, and the welding end WE to each other by welding, melting, and then cooling to integrally bond the cap assembly 200 and the battery can 100 to each other. In the present embodiment, the wing 220, the body 210, and the welding end WE may be joined to each other by laser welding. However, the present disclosure is not limited thereto, and various suitable kinds of welding processes may be utilized so long as the wing 220, the body 210, and the welding end WE are welded to each other without damaging other components of the cap assembly 200.

The bead portion 320 forms the uppermost part of the welding portion 310, as a molten welding base metal of the wing 220, the body 210, and the welding end WE flows and solidifies along a contour corresponding to the flow surface (e.g., defined by the welding recess WR) during welding. In this case, the bead portion 320 may be formed in a boundary region, which is a welding point, between a wing-side surface 223 and the outer peripheral surface 101 of the battery can 100, and the bead portion 320 may grow along the wing-side surface 223 that is a side surface of the wing 220.

The cap width Dcap is less than the can width Dcan, so that a welding step WS is formed at the boundary region between the battery can 100 and the cap assembly 200. In other words, the wing-side surface 223 is positioned to be lower than the outer peripheral surface 101 of the battery can 100, so that the welding step WS is formed between the wing-side surface 223 and the outer peripheral surface 101. Accordingly, by providing the welding step WS, the initial weld bead may be inhibited from growing toward the battery can 100 (e.g., from growing along the outer peripheral surface 101).

Further, a welding process may be controlled to form the bead portion 320 to have a thickness that is less than or equal to a thickness of the welding step WS between the wing-side surface 223 and the outer peripheral surface 101, thereby preventing or substantially preventing the bead portion 320 from growing beyond the welding step WS onto the battery can 100. For example, the thickness of the bead portion 320 may be determined by considering various factors, such as the viscosity, a solidification time, a volume expansion rate, and/or welding finish characteristics of the molten metal used during the welding. By adjusting one or more of the welding parameters, the molten metal may flow sufficiently along the wing-side surface 223 to form the welding portion 310 through solidification, while allowing the maximum thickness of the bead portion 320 in the first direction I to correspond to the thickness of the welding step WS. Accordingly, a surface of the bead portion 320 may be positioned at the same or substantially the same level as that of the outer peripheral surface 101 of the battery can 100 as shown in FIG. 5, or at a lower level than that of the outer peripheral surface 101 of the battery can 100 as shown in FIG. 6.

Thus, by controlling the welding parameters to ensure that the surface of the bead portion 320 is not positioned higher than the outer peripheral surface 101, the bead portion 320 may be formed so that the side welding unit 300 is prevented or substantially prevented from protruding higher than the outer peripheral surface 101 of the battery can 100. Therefore, it may be possible to prevent the outer peripheral surface 101 of the secondary battery 500 from becoming uneven during the side welding process (e.g., the lateral welding process) of joining the battery can 100 and the cap assembly 200 to each other.

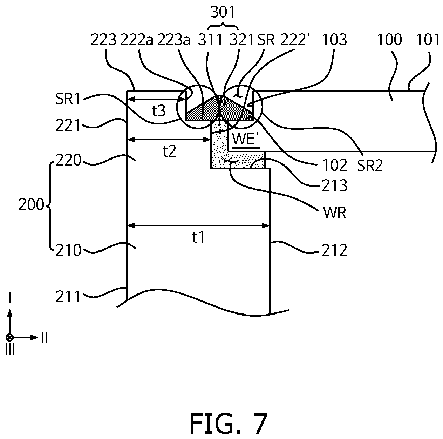

FIG. 7 illustrates an embodiment of a side welding unit included in the cap assembly shown in FIG. 2.

Referring to FIG. 7, the cap assembly 200 and the battery can 100 may have the same or substantially the same width as each other, such that the wing-side surface 223 and the outer peripheral surface 101 may be positioned at the same or substantially the same level as each other. In other words, the cap width Dcap and the can width Dcan (e.g., see FIG. 2) may be the same or substantially the same as each other. In this case, the cap assembly 200 may include (e.g., may have) an additional side recess (e.g., a lateral side recess) SR to receive a first side welding unit (e.g., a first side welding part or a first side weld portion) 301, while preventing or substantially preventing the first side welding unit 301 from protruding from the outer peripheral surface 101.

For example, the cap assembly 200 may include a body 210 having a body-front surface 211 and a body-back surface 212 of a first thickness t1 therebetween, and a wing 220 having two stepped portions to provide a first side recess SR1 in communications with the welding recess WR. For example, the wing 220 may include a wing-front surface 221 that is flush with the body-front surface 211, a wing-reduced-back surface 222' (e.g., a reduced back surface of the wing 220) positioned to define (e.g., defining) the welding recess WR and having a second thickness t2 smaller than the first thickness t1 along the second direction II from the wing-front surface 221. The wing 220 may further include a wing-bead-back surface 222a having a third thickness t3 smaller than the second thickness t2 along the second direction II from the wing-front surface 221, and a wing-bead-side surface 223a connected to the wing-bead-back surface 222a and the wing-reduced-back surface 222' and having a stepped portion against the body-side surface 213.

In other words, by removing a portion of the wing 220 adjacent to the welding end WE, the cap assembly 200 may further provide a first side recess SR1 that is connected to the welding recess WR, and is defined by the wing-bead-back surface 222a and the wing-bead-side surface 223a. In this case, the second thickness t2 may be at least 50% and no more than 80% of the first thickness t1, and the third thickness t3 may be at least 50% and no more than 80% of the second thickness t2. Accordingly, the welding support of the wing 220 having two stepped portions may be sufficiently secured.

Similarly, by removing a portion of the welding end WE adjacent to the wing 220, the battery can 100 may include (e.g., may be provided with) a can-bead-side surface 102 that is stepped with respect to the outer peripheral surface 101 and positioned at the same or substantially the same level as that of the wing-bead-side surface 223a, and a can-bead-front surface 103 that is positioned opposite to (e.g., to face) the wing-bead-back surface 222a in the second direction II and connected to the can-bead-side surface 102 and the outer peripheral surface 101, thereby forming a welding end (e.g., a stepped welding end) WE'. In other words, by removing a portion of the welding end WE' adjacent to the wing 220, the battery can 100 may include a second side recess SR2 that is connected to the welding recess WR, and is defined by the can-bead-side surface 102 and the can-bead-front surface 103, to form the welding end WE'.

Accordingly, the boundary region between the cap assembly 200 and the battery can 100 may be provided with the side recess SR that is in communication with the weld recess WR and includes the first and second side recesses SR1 and SR2.

In this case, the first side welding unit 301 may be accommodated in the side recess SR so that the first side welding unit 301 is prevented from protruding higher than the wing-side surface 223 or the outer peripheral surface 101 of the battery can 100. The cap assembly 200 and the battery can 100 may be integrally joined to each other by the first side welding unit 301 provided in the side recess SR.

The first side welding unit 301 may include a first welding portion 311 that joins the wing-reduced-back surface 222', the body-side surface 213, and the welding end WE' to each other by welding, and a cone-shaped first bead portion 321 extending from the first welding portion 311.

The first welding portion 311 has the same or substantially the same configuration as that of the welding portion 310 described above with reference to FIGS. 5 and 6, except for having a reduced height. Thus, redundant description of the first welding portion 311 may not be repeated.

The first bead portion 321 may be connected to the first welding portion 311, may cover the wing-bead-side surface 223a and the can-bead-side surface 102, and may extend conically along the wing-bead-back surface 222a and the can-bead-front surface 103. A tip of the first bead portion 321 may be positioned at a level lower than those of the wing-side surface 223 and the outer peripheral surface 101.

The first welding portion 311 may have a reduced length compared to that of the welding portion 310 described above, which may result in a reduced welding area. Further, the first bead portion 321 may grow upwardly from the first welding portion 311 to have a smaller cross-sectional area, forming a conical shape within the side recess SR.

Accordingly, the first modified bead portion 321 may grow in the first direction I along the wing-bead-back surface 222a and the can-bead-front surface 103, while covering the wing-bead-side surface 223a and the can-bead-side surface 102 that constitute the bottom of the side recess SR and define the side recess SR.

The welding bead may grow most actively in a central portion in communication with the welding recess WR, and may grow relatively slowly towards the wing-bead-back surface 222a and the can-bead-front surface 103 located at the periphery of the welding recess WR, such that a cone-shaped first bead portion 321 may be formed.

In the present embodiment, the wing-bead-back surface 222a and the can-bead-front surface 103 have the same or substantially the same depression depth as each other, while the wing-bead-side surface 223a and the can-bead-side surface 102 are provided at the same or substantially the same level as each other, so that the side recess SR may have a square cross-sectional shape.

In the present embodiment, the welding area at the wing-back surface 222' is reduced by the side recess SR, but this may be offset by the increased welding area at the wing-bead-side surface 223a and the can-bead-side surface 102. Accordingly, the first bead portion 321 may be accommodated in the side recess SR, but the bonding strength of the first welding portion 311 may remain or substantially remain intact. Accordingly, in a case where the cap assembly 200 and the battery can 100 are located at a single level without any stepped portion, the side recess SR may be formed to accommodate the first bead portion 321 to prevent or substantially prevent the first side welding unit 301 from protruding from the surface of the secondary battery 500.

In the present embodiment, the side recess SR has the square cross-sectional shape, but the present disclosure is not limited thereto, and the side recess SR may have various suitable shapes so long as it can accommodate the first side welding unit 301.

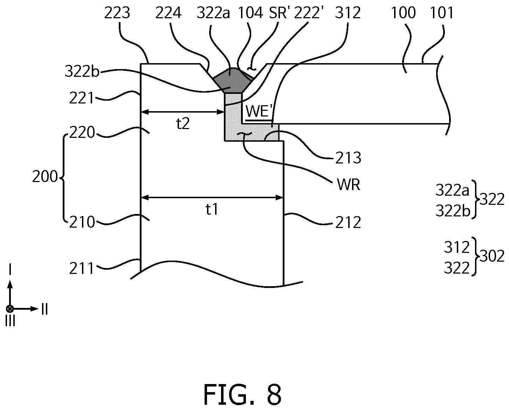

FIG. 8 illustrates an embodiment of a side welding unit in the secondary battery shown in FIG. 2.

Referring to FIG. 8, the cap assembly 200 may include a side recess SR', and a second side welding unit (e.g., a second side welding part or a second side weld portion) 302 may be formed along a shape of the side recess SR' and provided at the side recess SR'.

Portions of the wing 220 and the welding end WE' that are adjacent to each other may be removed to be symmetrically or substantially symmetrically sloped away from each other, so that the wing-bead-back surface 222a and the can-bead-front surface 103 described above with reference to FIG. 7 may be formed with a first sloping surface 224 and a second sloping surface 104, respectively. Accordingly, the side recess SR' may be provided on a side of the cap assembly 200 that is in communication with the welding recess WR, and may be defined by the first sloping surface 224 and the second sloping surface 104.

In this case, the first sloping surface 224 may extend from an edge of the wing-side surface 223 to an edge of the wing-reduced-back surface 222', such that the third thickness t3 may be variable along the first direction I. Further, the second sloping surface 104 may extend from an edge of the outer peripheral surface 101 to an edge of a surface of the welding end WE' facing the wing-reduced-back surface 222'. In some embodiments, the second sloping surface 104 may extend from an edge of the outer peripheral surface 101 to an edge of the can-bead-side surface 102 shown in FIG. 7. Accordingly, the side recess SR' may have a trapezoidal cross-section shape that is inwardly recessed from the outer peripheral surface 101 and the wing-side surface 223. In this case, the second side welding unit 302 may include a second welding portion 312, and a second bead portion 322 extending from the second welding portion 312.

The second welding portion 312 joins the wing-reduced-back surface 222', the body-side surface 213, and a reduced welding end WE' to each other by welding. The second welding portion 312 has the same or substantially the same configuration as that of the first welding portion 311 described above with reference to FIG. 7. Accordingly, redundant description of the second welding portion 312 may not be repeated.

The second bead portion 322 may be accommodated in the side recess SR', and may extend conically from the second welding portion 312 along the first sloping surface 224 and the second sloping surface 104. A top of the second bead portion 322 may be lower than the outer peripheral surface 101 and the wing-side surface 223.

The second bead portion 322 has the same or substantially the same configuration as that of the first bead portion 321, except that the welding surface is sloped. Accordingly, redundant description of the second bead portion 322 may not be repeated. The second bead portion 322 may grow to increase in volume up to an inflection point set by the welding process conditions, and then may grow upwardly to decrease in volume after the inflection point. Accordingly, the second modified bead portion 322 may include a base portion 322b that increases in volume along the first direction I until reaching the inflection point while being in contact with the first and second sloping surfaces 224 and 104, and a conical portion 322a that decreases in volume along the first direction I from the inflection point while not being in contact with the first and second sloping surfaces 224 and 104.

In this case, a top of the conical portion 322a may be accommodated in the side recess SR' to be positioned at a level lower than those of the outer peripheral surface 101 and the wing-side surface 223, thereby preventing or substantially preventing the protrusion of the second side welding unit 302 from the surface of the secondary battery 500.

While the present embodiment shows the cap assembly 200 and the battery can 100 having a prismatic cross-section, the present disclosure is not limited thereto, and various suitable shapes, such as cylindrical shape, may be adopted as long as the cover covering the opening of the opened cylinder structure communicating with the outside can be sealed by welding.

Accordingly, the cap assembly 200 and the battery can 100 according to various embodiments of the present disclosure may be joined to each other at the side of the secondary battery 500 by any one of the side welding unit 300, the first side welding unit 301, or the second side welding unit 302, as described above.

Further, the electrode assembly EA accommodated within the battery can 100 and the separately disposed positive terminal P and negative terminal N may be reliably positioned.

In some embodiments, the secondary battery 500 may include a lithium-ion battery. However, the present disclosure is not limited thereto, and the secondary battery 500 may include various suitable kinds of secondary batteries, as long as the cap assembly can be utilized as an electrode terminal.

According to some embodiments of the present disclosure, instead of forming a stepped portion at the end of the battery can 100, a stepped portion(s) is formed at the peripheral portion of the cap assembly 200 to allow the battery can 100 to be inserted into and joined to the welding recess WR. Accordingly, the formation of a bonding stepped portion for both of the end of the battery can 100 and the end of the cap assembly 200 is not required to join the battery can 100 with the cap assembly 200.

Because the battery can 100 may be formed by a continuous single molding process, the forming of the bonding stepped portion at the welding end WE may use an additional process for the battery can 100, which may reduce the manufacturing process efficiency of the secondary battery 500.

On the other hand, the secondary battery 500 according to some embodiments of the present disclosure may simplify the manufacturing process of the secondary battery 500 and improve the manufacturing process efficiency by forming the bonding stepped portion on the cap assembly 200, which is formed by the molding process, rather than on the battery can 100.

According to some embodiments of the present disclosure as described above, an additional process to form a welding end on the battery can 100 may be omitted by forming the welding end on the cap assembly 200, which is formed by the molding process. Accordingly, the manufacturing process of the secondary battery 500 may be simplified and yield may be improved, thereby improving process efficiency.

According to some embodiments of the present disclosure as described above, the side welding unit 300, the first side welding unit 301, and the second side welding unit 302 may be configured to not protrude from the outer peripheral surface 101 of the battery can 100 to maintain a uniform width of the secondary battery 500. Accordingly, the standardization of the dimensions of the secondary battery 500 may be prevented from being compromised by the side welds.

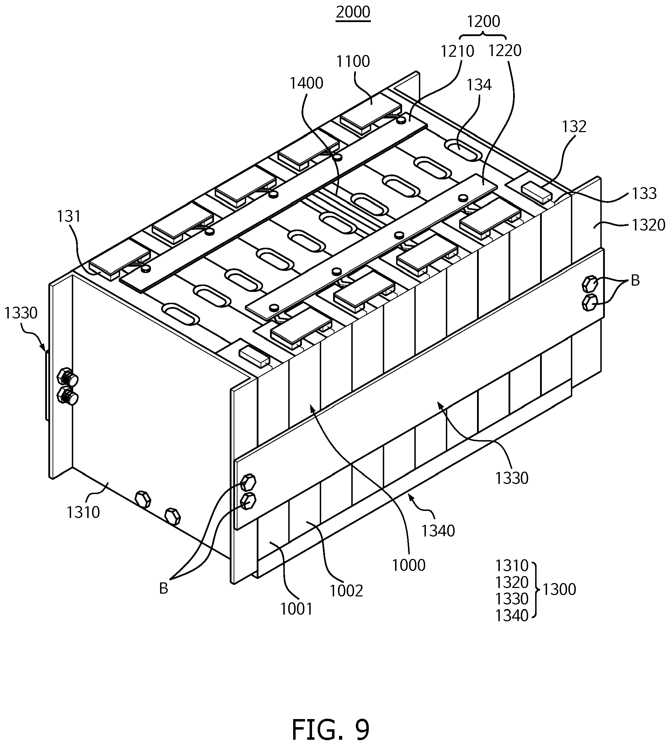

FIG. 9 is a perspective view illustrating a battery module according to an embodiment of the present disclosure.

A battery module 2000 shown in FIG. 9 may include a plurality of battery cells that are the same or substantially the same as the secondary battery 500 described above with reference to FIGS. 1 to 8. Accordingly, in the battery module 2000 shown in FIG. 9, the same or like reference numerals denote the same or like parts as those described above with reference to FIGS. 1 to 8, and thus, redundant description thereof may not be repeated.

Referring to FIG. 8, the battery module 2000 according to an embodiment of the present disclosure may include a plurality of battery cells 1000, each including a first connection terminal 131 and a second connection terminal 132. The battery cells 1000 may be arranged along one direction. A plurality of connection tabs 1100 may connect adjacent battery cells 1001 and 1002 to each other, and a protection circuit unit (e.g., a protection circuit) 1200 may be connected to the plurality of connection tabs 1100 to protect the battery cells 1000 from an overcurrent.

For example, each battery cell 1000 may include the secondary battery 500 having the configuration described above with reference to FIGS. 1 to 8. Accordingly, the battery cell 1000 may generate a current by an electrochemical reaction of the electrode assembly EA and the electrolyte solution accommodated in the battery can 100.

In more detail, the battery cell 1000 may have a side terminal structure in which the cap assembly 200 is disposed at opposite ends of the battery can 100 in the second direction II. Accordingly, a positive terminal and a negative terminal may be disposed at each corresponding end of the battery cell 1000.

The battery cells 1000 are arranged so that the wider outer surfaces of the adjacent battery cans 100 are aligned to contact each other in the third direction III, and the pair of cap assemblies 200 are disposed on opposite ends of each battery can 100 in the second direction II and the cap assemblies 200 are aligned in the third direction III.

The positive terminal T1 is connected to the first connection terminal 131 by a first connection line extending upwardly, and the negative terminal T2 is connected to the second connection terminal 132 by a second connection line 133 extending upwardly. Accordingly, the positive and negative terminals T1 and T2 located on the sides of the battery cell 1000 are connected with the first and second connection terminals 131 and 132 located on the top of the battery cell 1000 by the first connection line and the second connection line 133, respectively.

In this case, a plurality of first connection terminals 131 and a plurality of second connection terminals 132 may be electrically connected to the connection tabs 1100. The plurality of battery cells 1000 connected to a single connection tab 1100 by the first connection terminal 131 or the second connection terminal 132 may function as a group of cells that are connected in parallel to each other.

In other words, the plurality of battery cells 1000 connected to the connection tabs 1100 may be connected in parallel to each other, and the connection tabs 1100 may be connected in series with each other, such that the groups of cells connected by the connection tabs 1100 are connected in series with each other.

Thus, by adjusting the number of cell groups connected to the connection tabs 1100, the plurality of battery cells 1000 may be electrically connected in a desired combination of series connections and parallel connections to form the battery module 2000.

Gas generated during the operation of the plurality of battery cells 1000 may be vented to the outside via vents 134.

The number and the arrangement of the battery cells 1000 forming the battery module 2000 are not limited to those shown in FIG. 9, and may be variously modified as needed or desired.

The plurality of battery cells 1000 may be arranged along one direction with the wider outer surfaces 101 facing each other, and the arranged plurality of battery cells 1000 may be secured by a module housing 1300.

In this case, the battery cell 1000 is arranged such that a side welding unit (e.g., a side welding part or a side weld portion) 300 is provided on the side of the battery cell 1000, while a surface of the side welding unit 300 is positioned lower than an outer peripheral surface of the battery cell 1000. Therefore, the surface of the side welding unit 300 is positioned at a lower level than that of the outer peripheral surface 101 of the battery can 100 forming the battery cell 1000. Accordingly, the side welding unit 300 may be prevented or substantially prevented from protruding outside from the battery can 100.

As a result, the battery cells 1000 may be arranged to conform to a desired design size, so that their wider surfaces can easily face each other.

The module housing 1300 may include a pair of end plates 1310 and 1320 disposed at the front and the rear of the aligned battery cells 1000 to face the wider surfaces of the battery cells 1000, and side plates 1330 and a bottom plate 1340 connecting the pair of end plates 1310 and 1320 to each other.

The side plates 1330 may be provided in pairs to concurrently or substantially simultaneously support two sides of the plurality of battery cells 1000, and the bottom plate 1340 may be provided to concurrently or substantially simultaneously support a bottom surface of the plurality of battery cells 1000. The parts of the module housing 1300 may be connected to each other by coupling members, such as bolts B and/or the like.

The protection circuit unit 1200 may include electronics, protection circuits, and the like, and may be electrically connected to the connection tabs 1100. The protection circuit unit 1200 includes a first circuit unit (e.g., a first circuit) 1210 and a second circuit unit (e.g., a second circuit) 1220 extending at different locations along the direction in which the plurality of battery cells 1000 are arranged.

In this case, the first circuit unit 1210 and the second circuit unit 1220 may be spaced apart from each other, and may be positioned parallel to or substantially parallel to each other so that each of the first circuit unit 1210 and the second circuit unit 1220 is electrically connected to corresponding adjacent connection tabs 1100.

For example, the first circuit unit 1210 extends at an upper first side of the plurality of battery cells 1000 along the direction in which the plurality of battery cells 1000 are arranged, and the second circuit unit 1220 extends at an upper second side of the plurality of battery cells 1000 along the direction in which the plurality of battery cells 1000 are arranged. In this case, the second circuit unit 1220 may be spaced apart from the first circuit unit 1210 by a suitable distance (e.g., a certain or predetermined distance) with the vents 134 located therebetween, and may be disposed to be parallel to or substantially parallel to the first circuit unit 1210.

The pair of circuit units 1210 and 1220 may be disposed side-by-side each other, and may be spaced apart from each other and extend along the direction in which the plurality of battery cells are arranged, thereby minimizing or reducing the area of the printed circuit board (PCB) forming the protection circuit unit 1200.

A detection line 1400 may be provided to detect a voltage, a temperature, and a current of each battery cell 1000 to verify the normal operation of each battery cell 1000. Further, in the event of an abnormal operation, the detection line 1400 may transmit a stop signal that may stop the operation of the defective cell.

First operation information including a voltage, a current, a temperature, and the like that is transmitted from the first circuit unit 1210 and the connection tabs 1100 adjacent to the first circuit unit 1210, and second operation information including a voltage, a current, a temperature, and the like that is transmitted from the second circuit unit 1220 and the connection tab 1100 adjacent to the second circuit unit 1220, may be managed integrally through the detection line 1400.

For example, the detection line 1400 may include (e.g., may be made of) a flexible material, and thus, allowing the detection line 1400 to adapt flexibly to a shape and a structure of the surrounding environment.

In more detail, in the event that swelling occurs in the battery cell 1000, the elasticity or the flexibility of the detection line 1400 may absorb impacts and prevent or substantially prevent damage to the first and second circuit units 1210 and 1220.

In the present embodiment, the protection circuit unit 1200 may include a battery management system (BMS), and the connection tab 1100 may include a bus bar.

According to the battery module 2000 described above, the cap assembly 200 and the battery can 100 forming the battery cell 1000 may be joined to each other by welding at the side of the battery cell 1000, and the side welding unit 300 may be positioned below the outer peripheral surface 101 of the battery can 100 so that the side welding unit 300 may not protrude to the outside of the battery can 100. Accordingly, adjacent battery cells 1000 may be reliably face-to-face aligned with each other.

According to some embodiments described above, a bonding recess (e.g., a welding recess) may be formed not in a battery can that is integrally formed by a forging process such as deep drawing, but in a cap assembly that is a cap assembly structure manufactured by molding. Therefore, the cap assembly and the battery can may be joined with each other by side welding, without additional processing for the battery can. Accordingly, the stability and yield of the secondary battery may be improved.

According to one or more embodiments of the present disclosure, during welding of the cap assembly and the battery can, the weld bead generated on a sidewall may be located below an outer peripheral surface of the battery can to prevent or substantially prevent the weld bead from protruding to the outside of the battery can. Accordingly, a uniform width of the cap assembly may be maintained.

According to one or more embodiments of the present disclosure, by preventing the weld bead from protruding onto the surface of the secondary battery, it may be possible to minimize or reduce an alignment complexity in the face-to-face alignment of adjacent battery cells in a battery module with secondary batteries arranged along a row, thereby increasing the density of battery cells accommodated in a single housing.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. A secondary battery (500), comprising:
a battery can (100) having an opening (O) to expose an accommodating space to the outside, a can width (Dcan) in a first direction, and a can length in a second direction crossing the first direction;
an electrode assembly (EA) in the accommodating space, and comprising a positive electrode plate (A), a negative electrode plate (C), and a separator (S) between the positive electrode plate (A) and the negative electrode plate (C);
a cap assembly (200) electrically connected to the positive electrode plate (A) and the negative electrode plate (C), and having a welding recess (WR) at a peripheral portion of the cap assembly (200), the cap assembly (200) being joined to a welding end (WE) of the battery can 100 via the welding recess (WR) to seal the accommodating space; and
a side welding unit (300) joining a side portion of the welding end (WE) of the battery can (100) to a side portion of the cap assembly (200), a surface of the side welding unit (300) being located at a same level as or a level lower than that of an outer peripheral surface (101) of the battery can (100).

2. The secondary battery (500) as claimed in claim 1, wherein a width (Dcap) of the cap assembly (200) in the first direction is smaller than a width (Dcan) of the battery can (100) in the first direction.

3. The secondary battery (500) as claimed in claim 2, wherein the cap assembly (200) comprises:
a body (210) having a body-front surface (211) exposed to the outside, a body-back surface (212) defining the accommodating space, and a first thickness (t1) in the second direction from the body-front surface (211) to the body-back surface (212); and
a wing (220) having a wing-front surface (221) that is flush with the body-front surface (211), a wing-back surface (222) defining the welding recess (WR), and a second thickness (t2) in the second direction from the wing-front surface (221) to the wing-back surface (222), the second thickness (t2) being smaller than the first thickness (t1).

4. The secondary battery (500) as claimed in claim 3, wherein the welding recess (WR) is defined by the wing-back surface (222) and a body-side surface (213) connecting the wing-back surface (222) and the body-back surface (212) to each other,
wherein the welding recess (WR) is configured to join the welding end (WE) to the wing-back surface (222) and the body-side surface (213), and
wherein a welding step (WS) is located between a wing-side surface (223) of the wing (220) and an outer peripheral surface (101) of the welding end (WE).

5. The secondary battery (500) as claimed in claim 4, wherein the side welding unit (300) comprises:
a welding portion (310) joining the wing-back surface (222), the body-side surface (213), and the welding end (WE) to each other; and
a bead portion (320) extending from the welding portion (310) along the wing-side surface (223) and having a maximum thickness corresponding to a thickness of the welding step (WS).

6. The secondary battery (500) as claimed in claim 5, wherein a surface of the bead portion (320) is located at a same level as or a lower level than that of the outer peripheral surface (101) of the welding end (WE).

7. The secondary battery (500) as claimed in any one of claims 3 to 6,
wherein the second thickness (t2) is at least 50% and no more than 80% of the first thickness (t1).

8. The secondary battery (500) as claimed in claim 1, wherein a width (Dcap) of the cap assembly (200) in the first direction is the same as the can width (Dcan) of the battery can (100) in the first direction.

9. The secondary battery (500) as claimed in claim 8, wherein the cap assembly (200) comprises:
a body (210) having a body-front surface (211) exposed to the outside, a body-back surface (212) defining the accommodating space, and a first thickness (t1) in the second direction from the body-front surface (211) to the body-back surface (212); and
a wing (220) having a wing-front surface (221) that is flush with the body-front surface (211), a wing-reduced-back surface (222') defining the welding recess (WR) and having a second thickness (t2) smaller than the first thickness (t1) in the second direction from the wing-front surface (221) to the wing-reduced-back surface (222'), a wing-bead-back surface (222a) having a third thickness (t3) smaller than the second thickness (t2) in the second direction from the wing-front surface 221, and a wing-bead-side surface (223a) connected to the wing-bead-back surface (222a) and the wing-reduced-back surface (222') and having a stepped portion against a body-side surface (213), and
wherein the cap assembly (200) has a first side recess (SR1) communicatively connected with the welding recess (WR) and defined by the wing-bead-back surface (222a) and the wing-bead-side surface (223a).

10. The secondary battery (500) as claimed in claim 9, wherein the welding end (WE') comprises:
a can-bead-side surface (102) that is stepped with respect to the outer peripheral surface (101), and located at a same level as that of the wing-bead-side surface (223a); and
a can-bead-front surface (103) facing the wing-bead-back surface (222a) in the second direction, and connected to the can-bead-side surface (102) and the outer peripheral surface (101), and
wherein the welding end (WE') has a second side recess (SR2) communicatively connected with the welding recess (WR) and the first side recess (SR1), the second side recess (SR2) being defined by the can-bead-side surface (102) and the can-bead-front surface (103).

11. The secondary battery (500) as claimed in claim 10, wherein the side welding unit (301) comprises:
a welding portion (311) joining the wing-reduced-back surface (222'), the body-side surface (213), and the welding end (WE') to each other; and
a bead portion (321) connected to the welding portion (311)0 and covering the wing-bead-side surface (223a) and the can-bead-side surface (102), the bead portion (321) extending conically along the wing-bead-back surface (222a) and the can-bead-front surface (103), while a tip thereof is located at a level lower than those of a wing-side surface (223) and the outer peripheral surface (101).

12. The secondary battery (500) as claimed in claim 10, wherein the wing-bead-back surface has a first sloping surface (224) extending from an edge of a wing-side surface (223) to an edge of the wing-reduced-back surface (222'), and the third thickness that is variable along the first direction, and
the can-bead-front surface has a second sloping surface (104) extending from an edge of the outer peripheral surface (101) to an edge of the can-bead-side surface.

13. The secondary battery (500) as claimed in claim 12, wherein the side welding unit (302) comprises:
a welding portion (312) joining the wing-reduced-back surface (222'), the body-side surface (213), and the welding end (WE') to each other; and
a bead portion (322) comprising a base portion (322b) having an increasing volume in the first direction from the welding portion (312) while being in contact with the first sloping surface (224) and the second sloping surface (104), and a conical portion (322a) having a decreasing volume in the first direction while not being in contact with the first sloping surface (224) and the second sloping surface (104), and
wherein a top of the conical portion (322a) is located at a level lower than those of the outer peripheral surface (101) and the wing-side surface (223).

14. The secondary battery (500) as claimed in any one of claims 1 to 13,
wherein the opening (O) is located at each of opposite ends of the battery can (100) in the second direction, and
wherein the cap assembly (200) comprises a pair of side terminals (T1, T2) at the opposite ends of the battery can (100) to electrically connect to the positive electrode plate (A) and the negative electrode plate (C).

15. A battery module (2000) comprising:
a plurality of battery cells (1000), each comprising:
a corresponding battery can (100) configured to accommodate an electrode assembly (EA), and having a can width (Dcan) in a first direction and a can length in a second direction crossing the first direction; and
a corresponding cap assembly (200) comprising electrode terminals (T), and welded to an end of the corresponding battery can (100), the plurality of battery cells (1000) being aligned along a row in a third direction so that the battery cans of the battery cells face each other;
a plurality of connection terminals (131, 132) on a top surface of the plurality of battery cells, and connected to the electrode terminals (T) of the plurality of battery cells through connection lines connecting the electrode terminals (T) with one another;
a plurality of connection tabs (1100) connecting a group of connection terminals (131, 132) from among the connection terminals (131, 132) to each other to transmit electrical energy; and
a protection circuit connected with the plurality of connection tabs (1100) to protect the plurality of battery cells (1000) from an overcurrent,
wherein each of the plurality of battery cells (1000) further comprises a side weld to which a welding end of the corresponding battery can (100) is received in a welding recess (WR) at a side of the corresponding cap assembly (200) and welded, the side weld having a surface that is located at a same level as or a lower level than that of an outer peripheral surface (101) of the corresponding battery can (100).
